# EUROPÄISCHE PATENTANMELDUNG

(11) **EP 0 841 134 A1**
(43) Veröffentlichungstag der Anmeldung: **13.05.1998**
(21) Anmeldenummer: 97119098.8
(22) Anmeldetag: 01.11.1997
(51) Int. Cl.: B27K 3/50

(54) **Verwendung eines Holzschutzmittels**

(30) Priorität: 07.11.1996 DE 19645863; 31.05.1997 DE 19722968
(71) Anmelder: DESOWAG GmbH, D-40476 Düsseldorf (DE)
(72) Erfinder: Hiller, Johannes Christian, Dr., 41564 Kaarst (DE); Höllbacher, Günther, Dr., 47804 Krefeld (DE); Kokernak, Manfred, 47475 Kamp-Lintorf (DE)
(74) Vertreter: Sparing - Röhl - Henseler Patentanwälte

(57) **Zusammenfassung**

Die Erfindung betrifft die Verwendung eines Holzschutzmittels, enthaltend wenigstens eine Triazolverbindung als Fungizid, ein wasserverdünnbares Alkydharz als Bindemittel, wenigstens einen nichtionogenen Emulgator und Wasser als Verdünnungsmittel, in schwermetallfreier Form bei der Druck- und/oder Vakuumimprägnierung von Hölzern oder Holzprodukten, die in Kontakt mit Erde oder Süßwasser eingesetzt werden.

## Beschreibung

Die Erfindung betrifft eine Verwendung eines Holzschutzmittels für Hölzer oder Holzprodukte, die in Kontakt mit Erde oder Wasser eingesetzt werden.

Aus DE 30 04 319 C2 ist ein wasserverdünnbares Holzschutzmittel bekannt, das neben einem Insektizid eine Fungizidmischung in Form einer metallorganischen Verbindung und einer Triazolverbindung sowie ein wasserverdünnbares Alkydharz einer mittleren Öllänge, einen nichtionogenen Emulgator, ein Polyol oder ein Äther oder Ester hiervon und einen Puffer oder pH-Wertregler gegebenenfalls zusammen mit Wasser enthält. Das Alkydharz dient hierbei zum Reduzieren der Auswaschbarkeit von Wirkstoffen, wobei allerdings festgestellt wurde, daß die Auswaschbarkeit von Azolverbindungen hierdurch praktisch nicht beeinträchtigt wird.

Als Fungizide verwendete Azolverbindungen wurden bisher nur bis zur Gefährdungsklasse 3 gemäß EN 335 (zum Schutz von Holz- oder Holzprodukten nicht unter Dach, aber nicht im Erdkontakt, d.h. entweder ständig der Witterung ausgesetzt oder vor der Witterung geschützt, aber Gegenstand häufiger Befeuchtung) eingesetzt, jedoch nicht für die Gefährdungsklasse 4 (Holz oder Holzprodukt in Kontakt mit Erde oder Süßwasser und damit ständig einer Befeuchtung ausgesetzt). Hierbei wurde davon ausgegangen, daß die Triazolverbindung und das Bindemittel Alkydharz, zumal letzteres die Auswaschbarkeit des ersteren praktisch nicht beeinträchtigt, unabhängig voneinander abgebaut werden, so daß die Triazolverbindung wegen mangelnder Beständigkeit im Boden auf Dauer keinen genügenden Schutz in der Gefährdungsklasse 4 bieten kann.

Vielmehr werden für die Gefährdungsklasse 4 als Fungizide weiterhin metall- und insbesondere Sn- oder Cu-haltige Verbindungen, wie in DE 30 04 319 teilweise aufgeführt, eingesetzt, die jedoch zu einer Gefährdung der Grundwasserqualität führen können.

Aufgabe der Erfindung ist es, eine Möglichkeit zu schaffen, Holz oder Holzprodukte ohne schwermetallhaltige Verbindungen bei einem Einsatz entsprechend der Gefährdungsklasse 4 zu schützen.

Überraschender Weise wurde gefunden, daß sich beim Einsatz eines schwermetallsalzfreien Holzschutzmittels, enthaltend eine Triazolverbindung als Fungizid, ein wasserverdünnbares Alkydharz als Bindemittel, einen nichtionogenen Emulgator und Wasser als Verdünnungsmittel bei der Druck- und/oder Vakuumimprägnierung von Hölzern oder Holzprodukten, die in Kontakt mit Erde oder Süßwasser eingesetzt werden, offenbar eine Wechselwirkung zwischen Triazolverbindung und Bindemittel ergibt, die dazu führt, daß die Triazolverbindung eine ausgezeichnete Langzeitwirkung zum Schutz des Holzes oder Holzproduktes zeigt, obwohl man eigentlich davon ausgehen mußte, daß beide Bestandteile unabhängig voneinander abgebaut werden. Dem in der Gefährdungsklasse 4 vor allem auftretenden Angriff von Moderfäulepilzen als auch Basidiomyceten konnten entsprechend imprägnierte Holzstäbe weitaus länger widerstehen als Kontrollholzstäbe, wie experimentell festgestellt wurde.

Dementsprechend ist Gegenstand der Erfindung die Verwendung eines Holzschutzmittels, enthaltend eine Triazolverbindung als Fungizid, ein wasserverdünnbares Alkydharz als Bindemittel, einen nichtionogenen Emulgator und Wasser als Verdünnungsmittel, in schwermetallfreier Form bei der Druck- und/oder Vakuumimprägnierung von Hölzern oder Holzprodukten, die in Kontakt mit Erde oder Süßwasser eingesetzt werden.

Bei den Triazolverbindungen handelt es sich insbesondere um 1-Trityl-1,2,4-triazol-Verbindungen der allgemeinen Formel 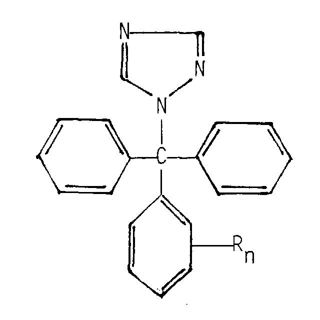 wobei R für ein Fluor-, Chlor- oder Bromatom, eine Trifluormethyl-, Nitro- oder Cyanogruppe oder eine Alkylgruppe mit bis zu 4 Kohlenstoffatomen und n für die Zahlen 1 und 2 steht. Diese Verbindung ist allein oder in Mischung mit einer oder mehreren anderen Triazolverbindungen sowie in Form ihrer Salze einer organischen oder anorganischen (schwermetallfreien) Säure verwendbar. Als Triazolverbindungen, die einzeln oder in Mischung verwendet werden können, kommen vorzugsweise Propiconazol, Tebuconazol oder Cyproconazol infrage, aber auch andere Triazole wie Azaconazol können eingesetzt werden.

Zweckmäßigerweise wird die Triazolverbindung in einer Menge von 0,01 bis 10 kg/m³, insbesondere 0,1 bis 1 kg/m³, imprägnierbare Holzware eingesetzt.

Das wasserverdünnbare Alkydharz, beispielsweise ein mittelöliges Alkydharz auf Basis von Sojaöl oder ein langöliges Alkydharz auf der Basis von linolsäurereichen Ölen, d.h. etwa solche Alkydharze, wie sie etwa unter der Warenbezeichnung "Uradil", "Hydrorob" oder "Resydrol" erhältlich sind, kann im Verhältnis von etwa 5:1 bis etwa 50:1, vorzugsweise etwa 5:1 bis etwa 10:1, zur Triazolverbindung eingesetzt werden. Derartige Alkydharze sind im allgemeinen zu neutralisieren. Dies geschieht üblicherweise mit einem Alkanolamin wie Monoethanol- oder Triethanolamin.

Als organische Lösungsmittel werden hierbei im allgemeinen Polyole, etwa Butylglykol, bzw. deren Äther oder Ester eingesetzt. Als Emulgatoren, die einzeln oder in Mischung eingesetzt werden können, werden vorzugsweise nichtionogene Emulgatoren wie Phenolethoxylat verwendet.

Dem Holzschutzmittel können ein oder mehrere Insektizide, beispielsweise Pyrethroide wie Permethrin, zugesetzt sein.

### Beispiel 1

Folgende Formulierungen auf der Basis von Propiconazol als Fungizid wurden hergestellt:

| Formulierung | A1 | A2 | A3 |
|---|---|---|---|
| Propiconazol | 2,0 % | 4,0 % | 6,0 % |
| Permethrin-Lösung | 1,1 % | 1,1 % | 1,1 % |
| Alkydharz (Uradil) | 30,0 % | 30,0 % | 30,0 % |
| Triethanolamin | 2,0 % | 2,0% | 2,0 % |
| Emulgator | 43,0 % | 43,0 % | 43,0 % |
| Rest Wasser | | | |

Das Alkydharz lag dabei in einer 75%-igen Butylglykollösung vor. Die Formulierungen A1, A2, A3 unterscheiden sich somit lediglich in den Gehalten an Propiconazol. Die so hergestellten Formulierungen wurden zur Kesselimprägnierung von Kiefern-Splint-Stäben verwendet. Die so imprägnierten Stäbe wurden an zwei unterschiedlichen Standorten A und B im Freiland in Anlehnung an EN 252 eingesetzt. Dabei zeigten sich folgende Ergebnisse:

| Formulierung | Propiconazol % | Einbringmenge kg/m³ Holz | Standzeit Jahre | Befall Standort A | B |
|---|---|---|---|---|---|
| A1 | 2 | 1,4 | 5 | 4,3% | 4,3% |
| A2 | 4 | 2,9 | 5 | 7,1% | 2,9% |
| A3 | 6 | 4,5 | 5 | 3,2% | 1,4% |
| Kontrollstäbe | - | - | 5 | 98,6% | 100,0% |

### Beispiel 2

Folgende Formulierungen auf der Basis von Tebuconazol als Fungizid wurden hergestellt:

| Formulierung | B1 | B2 | B3 | B4 |
|---|---|---|---|---|
| Tebuconazol | 0,35% | 0,53% | 0,70% | 1,40% |
| Permethrin-Lösung | 0,35% | 0,35% | 0,35% | 0,35% |
| Alkydharz (Uradil) | 10,50% | 10,50% | 10,50% | 10,50% |
| Butylglykol | 15,00% | 15,00% | 15,00% | 15,00% |
| Monoethanolamin | 0,20% | 0,20% | 0,20% | 0,20% |
| Emulgator | 15,00% | 15,00% | 15,00% | 15,00% |
| Rest Wasser | | | | |

Bei dem Emulgator handelt es sich um Phenolethoxylat. Die Formulierungen B1 bis B4 unterscheiden sich somit lediglich in den Gehalten an Tebuconazol. Die so hergestellten Formulierungen B1 bis B3 wurden zur Kesselimprägnierung von Kiefern-Splint-Stäben verwendet, während die Formulierung B4 zur Tauchimprägnierung derartiger Stäbe verwendet wurde. Die so imprägnierten Stäbe wurden an den beiden unterschiedlichen Standorten A und B von Beispiel 1 im Freiland eingesetzt. Dabei zeigten sich folgende Ergebnisse:

| Formulierung | Tebuconazol % | Einbringmenge kg/m³ Holz | Standzeit Jahre | Befall Standort A | B |
|---|---|---|---|---|---|
| B1 | 0,35 | 0,7 | 5 | 2,9% | 2,9% |
| B2 | 0,53 | 1,05 | 5 | 11,4% | 5,7% |
| B3 | 0,70 | 1,4 | 5 | 5,7% | 0,0% |
| B4 | 1,40 | 0,1 | 5 | 100,0% | 20,0% |
| Kontrollstäbe | - | - | 5 | 100,0% | 100,0% |

Weitere Kontrollstäbe, die mit entsprechenden Formulierungen einerseits ohne den Zusatz der Triazolverbindung und andererseits ohne den Zusatz des Bindemittels in Form des Alkydharzes behandelt und im Erdreich angeordnet wurden, waren wie die unbehandelten Kontrollstäbe nach drei Jahren im wesentlichen zerstört.

## Patentansprüche

1. Verwendung eines Holzschutzmittels, enthaltend wenigstens eine Triazolverbindung als Fungizid, ein wasserverdünnbares Alkydharz als Bindemittel, wenigstens einen nichtionogenen Emulgator und Wasser als Verdünnungsmittel, in schwermetallfreier Form bei der Druck- und/oder Vakuumimprägnierung von Hölzern oder Holzprodukten, die in Kontakt mit Erde oder Wasser eingesetzt werden.

2. Verwendung nach Anspruch 1, dadurch gekennzeichnet, daß die Triazolverbindung in einer Menge von 0,01 bis 10 kg/m³, insbesondere 0,1 bis 1 kg/m³ imprägnierbare Holzware eingesetzt wird.

3. Verwendung nach Anspruch 1 oder 2, dadurch gekennzeichnet, daß das wasserverdünnbare Alkydharz im Verhältnis von 5:1 bis 50:1, vorzugsweise 5:1 bis 10:1 zur Triazolverbindung eingesetzt wird.

4. Verwendung nach einem der Ansprüche 1 bis 3, dadurch gekennzeichnet, daß als Triazolverbindung Propiconazol verwendet wird.

5. Verwendung nach einem der Ansprüche 1 bis 4, dadurch gekennzeichnet, daß als Triazolverbindung Tebuconazol verwendet wird.

6. Verwendung nach einem der Ansprüche 1 bis 5, dadurch gekennzeichnet, daß als Triazolverbindung Cyproconazol verwendet wird.
